# EUROPEAN PATENT APPLICATION

(11) **EP 4 610 790 A1**
(43) Date of publication of application: **03.09.2025**
(21) Application number: 25700023.2
(22) Date of filing: 14.01.2025
(51) Int. Cl.: G06F 3/01, G06F 3/00, G06F 3/04842, G06F 1/16, G02B 27/01, G06T 19/00, G06N 3/02

(54) **WEARABLE ELECTRONIC DEVICE FOR DISPLAYING EXTENDED REALITY IMAGE, OPERATION METHOD THEREOF, AND RECORDING MEDIUM**

(30) Priority: 17.01.2024 KR 20240007204; 12.03.2024 KR 20240034682
(71) Applicant: Samsung Electronics Co., Ltd, Suwon-si, Gyeonggi-do 16677 (KR)
(72) Inventor: KIM, Sooyuh, Gyeonggi-do 16677 (KR); SON, Dongil, Gyeonggi-do 16677 (KR); SON, Chaeyeon, Gyeonggi-do 16677 (KR); AHN, Sungeun, Gyeonggi-do 16677 (KR); LIM, Kwangyong, Gyeonggi-do 16677 (KR); CHOI, Bokun, Gyeonggi-do 16677 (KR)
(74) Representative: HGF
(86) International application number: PCT/KR2025/000812
(87) International publication number: WO 2025/155065

(57) **Abstract**

A wearable electronic device wearable on a head of a user, according to an embodiment, may comprise a camera, a display, at least one processor, and memory storing instructions. The instructions according to an embodiment may, when executed by the at least one processor, enable the wearable electronic device to, based on images captured using the camera, display, through the display, a first screen including a plurality of objects arranged at a first location. The instructions according to an embodiment may, when executed by the at least one processor, enable the wearable electronic device to, based on a first gesture of the user, select at least one object to copy among the plurality of objects. The instructions according to an embodiment may, when executed by the at least one processor, enable the wearable electronic device to, based on a second gesture of the user, determine a second location on the first screen to display the at least one object. The instructions according to an embodiment may, when executed by the at least one processor, enable the wearable electronic device to, perform at least one of in-painting a portion of the at least one object that is obscured by at least one other object or out-painting the at least one object based on properties of the second location by providing the properties of the second location and information about the at least one object to a generative AI model stored in the memory, and obtain an object image corresponding to the at least one object by performing at least one of the in-painting or the out-painting. The instructions according to an embodiment may, when executed by the at least one processor, enable the wearable electronic device to, based on a third gesture of the user, display, through the display, a second screen including the object image located at the second location.

## Description

### [Technical Field]

Embodiments of the disclosure relate to a wearable electronic device displaying extended reality images, an operation method thereof, and a recording medium.

### [Background Art]

An increasing number of services and additional features are being offered through wearable electronic devices such as augmented reality glasses (AR glasses), video see through (VST) devices, virtual reality (VR) devices, and other extended reality (XR) devices. To meet the needs of various users and raise use efficiency of electronic devices, communication service carriers or device manufacturers are jumping into competitions to develop electronic devices with differentiated and diversified functionalities. Accordingly, various functions that are provided through wearable electronic devices are evolving more and more.

Extended reality (XR) devices, such as augmented reality glasses (AR glasses), video see through (VST) devices, and virtual reality (VR) devices provide users with a realistic experience by displaying virtual images while worn on the user's body. XR devices (e.g. AR glasses, VST devices, and VR devices) can replace the usability of smartphones in a variety of areas, such as gaming entertainment, education, and social networking services. Through XR devices (e.g. AR/ glasses, VST devices, or VR devices), users may be provided with life-like content and interact with it to feel like they are in a virtual world.

### [Disclosure of Invention]

### [Solution to Problems]

A wearable electronic device wearable on a head of a user, according to an embodiment, may comprise a camera, a display, at least one processor, and memory storing instructions. The instructions according to an embodiment may, when executed by the at least one processor, enable the wearable electronic device to, based on images captured using the camera, display, through the display, a first screen including a plurality of objects arranged at a first location. The instructions according to an embodiment may, when executed by the at least one processor, enable the wearable electronic device to, based on a first gesture of the user, select at least one object to copy among the plurality of objects. The instructions according to an embodiment may, when executed by the at least one processor, enable the wearable electronic device to, based on a second gesture of the user, determine a second location on the first screen to display the at least one object. The instructions according to an embodiment may, when executed by the at least one processor, enable the wearable electronic device to, perform at least one of in-painting a portion of the at least one object that is obscured by at least one other object or out-painting the at least one object based on properties of the second location by providing the properties of the second location and information about the at least one object to a generative AI model stored in the memory, and obtain an object image corresponding to the at least one object by performing at least one of the in-painting or the out-painting. The instructions according to an embodiment may, when executed by the at least one processor, enable the wearable electronic device to, based on a third gesture of the user, display, through the display, a second screen including the object image located at the second location.

A method for operating a wearable electronic device wearable on a head of a user, according to an embodiment, may comprise, based on images captured using a camera included in the wearable electronic device, displaying, through a display included in the wearable electronic device, a first screen including a plurality of objects arranged at a first location. The method for operating the wearable electronic device, according to an embodiment, may comprise, based on a first gesture of the user, selecting at least one object to copy among the plurality of objects. The method for operating the wearable electronic device, according to an embodiment, may comprise, based on a second gesture of the user, determining a second location on the first screen to display the at least one object. The method for operating the wearable electronic device, according to an embodiment, may comprise performing at least one of in-painting a portion of the at least one object that is obscured by at least one other object or out-painting the at least one object based on properties of the second location by providing the properties of the second location and information about the at least one object to a generative AI model stored in memory included in the wearable electronic device, and obtaining an object image corresponding to the at least one object by performing at least one of the in-painting or the out-painting. The method for operating the wearable electronic device, according to an embodiment, may comprise, based on a third gesture of the user, displaying, through the display, a second screen including the object image located at the second location.

According to an embodiment, a non-transitory recording medium may store instructions, when executed by at least one processor, cause the at least one processor to, based on images captured using a camera included in a wearable electronic device wearable on a head of a user, displaying, through a display included in the wearable electronic device, a first screen including a plurality of objects arranged at a first location, based on a first gesture of the user, selecting at least one object to copy among the plurality of objects, based on a second gesture of the user, determining a second location on the first screen to display the at least one object, performing at least one of in-painting a portion of the at least one object that is obscured by at least one other object or out-painting the at least one object based on properties of the second location by providing the properties of the second location and information about the at least one object to a generative AI model stored in memory included in the wearable electronic device, and obtaining an object image corresponding to the at least one object by performing at least one of the in-painting or the out-painting, and based on a third gesture of the user, displaying, through the display, a second screen including the object image located at the second location.

### [Brief Description of Drawings]

FIG. 1 is a view illustrating an electronic device in a network environment according to various embodiments;
FIG. 2 is a perspective view illustrating an internal configuration of a wearable electronic device according to an embodiment of the disclosure;
FIGS. 3A and 3B are views illustrating front and rear surfaces of a wearable electronic device according to an embodiment;
FIG. 4 is a block diagram schematically illustrating a wearable electronic device according to an embodiment;
FIG. 5A is a flowchart illustrating an operation method of a wearable electronic device according to an embodiment;
FIG. 5B is a flowchart illustrating an operation method of a wearable electronic device according to an embodiment;
FIG. 6A is a view illustrating a function of copying and pasting an object displayed on a screen by a wearable electronic device according to an embodiment;
FIG. 6B is a view illustrating a function of cutting an object displayed on a screen by a wearable electronic device according to an embodiment;
FIG. 7 is a flowchart illustrating in-painting and out-painting, performed by a wearable electronic device on an image representing at least one object using a generative AI model, according to an embodiment;
FIG. 8 illustrates in-painting and out-painting, performed by a wearable electronic device on an image representing at least one object using a generative AI model, according to an embodiment;
FIG. 9 is a flowchart illustrating a method for selecting at least one object by a wearable electronic device, according to an embodiment;
FIGS. 10A and 10B are views illustrating a method for selecting at least one object by a wearable electronic device, according to an embodiment;
FIG. 11 is a flowchart illustrating a method for determining a location to display at least one selected object by a wearable electronic device, according to an embodiment;
FIGS. 12A and 12B illustrate a method for determining a location to display at least one selected object by a wearable electronic device, according to an embodiment;
FIG. 13 is a flowchart illustrating a method for editing an object image by a wearable electronic device, according to an embodiment;
FIG. 14 illustrates a method for editing an object image by a wearable electronic device, according to an embodiment;
FIG. 15 is a flowchart illustrating a method for displaying an object image by a wearable electronic device, according to an embodiment; and
FIG. 16 is a view illustrating a method for displaying an object image by a wearable electronic device, according to an embodiment.

### [Mode for the Invention]

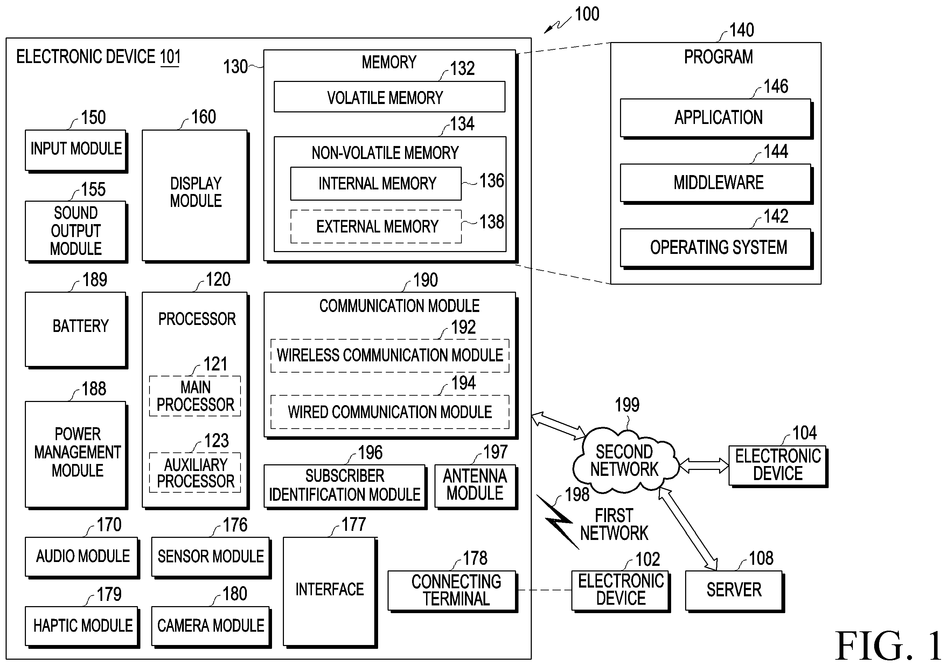

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

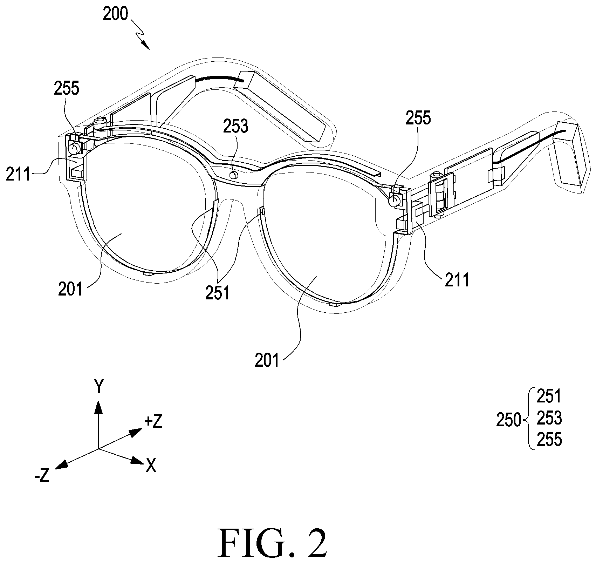

FIG. 2 is a perspective view illustrating an internal configuration of a wearable electronic device according to an embodiment of the disclosure;
Referring to FIG. 2, according to an embodiment of the disclosure, a wearable electronic device 200 may include at least one of a light output module 211, a display member 201, and a camera module 250.

According to an embodiment of the disclosure, the light output module 211 may include a light source capable of outputting an image and a lens guiding the image to the display member 201. According to an embodiment of the disclosure, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 201 may include an optical waveguide (e.g., a waveguide). According to an embodiment of the disclosure, the image output from the light output module 211 incident on one end of the optical waveguide may propagate inside the optical waveguide and be provided to the user. According to an embodiment of the disclosure, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1). According to an embodiment of the disclosure, the first camera module 251 may acquire information related to movement and positioning of the user's eye (or eyes) wherein the information can be used (for example by the first camera module 251 or processor 120) to determine and track a gaze direction of the user, for example to determine where a user is looking on an XR screen or in an XR environment.

According to an embodiment of the disclosure, a second camera module 253 may capture an external image. For example, the second camera module 253 may capture an image (or images) of the surroundings of the wearable electronic device.

According to an embodiment of the disclosure, a third camera module 255 may be used for hand detection and tracking, and recognition of the user's gesture (e.g., hand motion). According to an embodiment of the disclosure, the third camera module 255 may additionally or alternatively be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

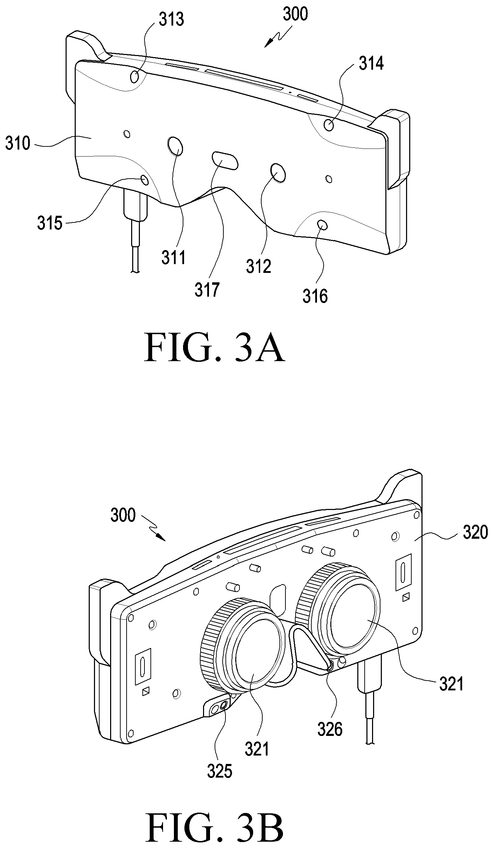

FIGS. 3A and 3B are views illustrating front and rear surfaces of a wearable electronic device according to an embodiment;
Referring to FIGS. 3A and 3B, in an embodiment, camera modules 311, 312, 313, 314, 315, and 316 and/or a depth sensor 317 for obtaining information related to the ambient environment of the wearable electronic device 300 may be disposed on the first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 317, the camera modules 313, 314, 315, and 316 may identify the distance to the object.

According to an embodiment, camera modules 325 and 326 for face recognition (e.g. eye tracking) and/or a display 321 (and/or lens) may be disposed on the second surface 320 of the housing.

In an embodiment, the face recognition camera modules 325 and 326 adjacent to the display may be used for recognizing the user's face (for example, tracking movement of the user's face) and/or may recognize and/or track an eye or both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on extended reality (e.g. augmented reality, virtual reality, and/or mixed reality) while worn on the user's head.

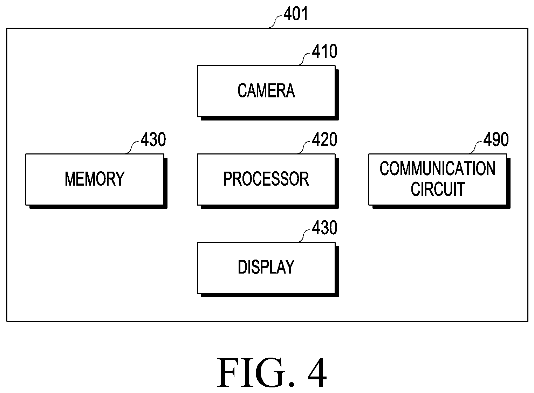

FIG. 4 is a block diagram schematically illustrating a wearable electronic device according to an embodiment.

Referring to FIG. 4, according to an embodiment, a wearable electronic device 401 (e.g., the electronic device 101 of FIG. 1, the wearable electronic device 200 of FIG. 2, or the wearable electronic device 300 of FIGS. 3A and 3B) may include a camera 410 (e.g., the camera module 180 of FIG. 1), at least one processor 420 (e.g., the processor 120 of FIG. 1), memory 430 (e.g., the memory 130 of FIG. 1), a display 460 (e.g., the display 160 of FIG. 1), and a communication circuit 490 (e.g., the communication module 190 of FIG. 1). According to the implementation, the wearable electronic device 401 may further include at least one sensor (not shown) (e.g., the sensor module 176 of FIG. 1).

According to an embodiment, the wearable electronic device 401 may be implemented to be the same as or similar to the electronic device 101 of FIG. 1, the wearable electronic device 200 of FIG. 2, and the wearable electronic device 300 of FIGS. 3A and 3B. According to an embodiment, the wearable electronic device 401 may be implemented as an augmented reality (AR) glass device, an extended reality (XR) device, a mixed reality (MR) device, a virtual reality (VR) device, or a video see through (VST) device. However, this is merely an example, and embodiments of the disclosure may be implemented as various devices.

According to an embodiment, the memory 430 may store at least one instruction that enables at least one operation of the wearable electronic device 401. For example, memory 430 may store instructions that, when executed by the at least one processor 420 individually or collectively, cause the wearable electronic device 401 to perform at least one operation described below.

Conventional wearable electronic devices may provide a function of copying at least one of a plurality of objects on a screen displayed on a display of the wearable electronic device and pasting the same to another location. However, the conventional wearable electronic devices simply provide copying and pasting of images obtained using a camera. Accordingly, the object pasted onto the screen displayed through the display of the wearable electronic device may not be naturally displayed. Further, when the object to be copied has a portion obscured by other objects, the object may be pasted onto the screen without the obscured portion restored.

The wearable electronic device 401 according to an embodiment may use a generative AI model in providing a function of copying (or selecting) at least one of a plurality of objects on a screen (for example, an extended reality screen) displayed on a display and pasting the same to another location. For example, the generative AI model may be stored in the memory 430 or an external electronic device (e.g., a server). For example, when the generative AI model is stored in an external electronic device (e.g., a server), the electronic device 201 may transmit information about the copied at least one object to the external electronic device (e.g., a server) and receive information about a modified object image of the corresponding object from the external electronic device (e.g., a server). For example, the wearable electronic device 401 may perform the modification based on the location to paste at least one copied (selected) object using the generative AI model. For example, when an object to be copied has a portion obscured by other objects, the wearable electronic device 401 may restore the obscured portion using a generative AI model and paste it onto the screen. For example, when the object to be copied is moved to another location in the virtual reality space (e.g., when a cutting function is performed), the wearable electronic device 401 may restore the portion where the object is originally located using the generative AI model.

Accordingly, the wearable electronic device 401 may display the object pasted onto the screen to naturally match the entire environment. Further, when displaying an augmented reality image or a virtual reality image in a three-dimensional (3D) space, the wearable electronic device 401 may realistically provide the user with a three-dimensional effect of the corresponding augmented reality (AR) image or virtual reality (VR) image.

According to an embodiment, the processor 420 may control the overall operation of the wearable electronic device 401.

According to an embodiment, based on an image (or images) captured using the camera 410, the processor 420 may display, through the display 460, a first screen including at least one object. For example, the processor 420 may display a first screen including a plurality of objects disposed at a first location through the display 460, based on an image captured using the camera 410. For example, the first screen may be implemented as a screen including an augmented reality (AR) image, a screen including a virtual reality (VR) image, an extended reality (XR) image, or a mixed reality (MR) image. Such a screen may be referred to as an extended reality (XR) screen. The object (or plurality of objects) may include a real object captured by the camera 410 and/or a virtual object generated or rendered by the processor 420. The first location may indicate the location where the object or plurality of objects are located on the first screen.

According to an embodiment, the processor 420 may identify the user's gesture and perform a function designated for the identified gesture. For example, the processor 420 may identify a gesture using the user's body (e.g., the user's hand) based on images obtained using the camera 410. For example, the user's gesture may include a shape of the user's hand, a movement of the user's hand, a change in the user's hand, a shape of the user's finger, or a change in the user's finger. For example, various gestures may correspond to different functions.

According to another embodiment, the processor 420 may identify a gesture by a controller of the wearable electronic device 401. For example, the processor 420 may identify a gesture by the controller identified through the camera 410. Alternatively, the processor 420 may receive information about the movement of the controller through the communication circuit 490 and identify the gesture by the controller based on the received information. The controller may be a part of the wearable electronic device 401 or may be a peripheral device. The controller may be configured to be recognized by the camera 410, or to communicate with the processor 420 through the communication circuit 490, in order to facilitate user input, for example via gestures. The controller may also comprise other user input means, such as buttons, touch pads, control sticks, microphones, and any other suitable input means.

According to an embodiment, based on a first gesture of the user, the processor 420 may select at least one object displayed at a first location on the first screen to copy. For example, the processor 420 may select at least one of the plurality of objects, based on identifying the first gesture of the user using the camera 410. For example, the at least one object may represent an object to be copied to be pasted to another location of the first screen. Alternatively, the at least one object may represent an object to be copied to be pasted onto a screen different from the first screen displayed through the display 460 of the wearable electronic device 401. For example, the first gesture may include a gesture in which the user opens their hand. For example, the processor 420 may identify or obtain information (e.g., information about the image, the texture of the object, and/or the color of the object) corresponding to the selected at least one object. Information about the selected at least one object may be stored in the memory 430 (e.g., a clipboard).

According to an embodiment, the processor 420 may select at least one object touched by the first gesture (e.g., the user's palm) or at least one object indicated by the first gesture (e.g., indicated by the user's palm surface) as the object to be copied. For example, the processor 420 may select a plurality of objects (or a group of a plurality of objects). Alternatively, the processor 420 may select a single object.

According to an embodiment, the processor 420 may determine the second location to display the selected at least one object, based on identifying the second gesture of the user using the camera 410 (or based on identifying a change from the first gesture to the second gesture). For example, the second gesture may be different from the first gesture. For example, the second location may indicate the location to display the selected or copied at least one object on the first screen. Or, the second location may indicate the location to display the selected or copied at least one object on a screen different from the first screen. The processor 420 may identify or obtain the properties for the second location (e.g., coordinate information about the second location, the environment (e.g., AR environment or VR environment) of the second location, the texture of the second location, whether there is another object at the second location, and/or the slope of the second location).

According to an embodiment, the processor 420 may obtain an object image corresponding to at least one object using a generative artificial intelligence (AI) model stored in the memory 430, based on the second gesture. For example, the processor 420 may perform a painting operation (e.g., an in-painting and/or out-painting operation) for generating a new image based on at least one of the properties of the second location and the information about the at least one object using the generative AI model. The processor 420 may perform in-painting (e.g., a painting operation of generating a portion obscured by another object) on a portion obscured by another object (e.g. in the first location) (e.g., a portion of an object not identified through the camera 410) in the at least one object by inputting the information about the at least one object, and in some examples the properties of the second location, to the generative AI model. The in-painting operation may be used to generate portions of the object that were not visible in the first location so that those portions are visible when the object is displayed in the second location. In some examples, properties of the second location may be used to determine which portions of the object will be visible in the second location, such that only those portions are generated by the in-painting operation. Further, the processor 420 may perform out-painting (e.g., a painting operation of generating a portion for lighting, shadow, and/or decoration) on at least a portion (e.g., lighting, shadow, and/or decoration) based on the properties of the second location by inputting the properties of the second location and the information about the at least one object to the generative AI model. The out-painting operation may be used to modify the object so that the object visually matches the properties of the second location. For example, the out-painting operation may include generating a shadow (or lighting) that would be cast by the object in the second location, generating shadows (or lighting) that would be cast onto the object based on objects in or around the second location, and/or changing a visual style or decoration of the object to match a visual style or decoration of the second location. The processor 420 may obtain an object image corresponding to at least one object by performing at least one of in-painting or out-painting on the at least one object using the generative AI model. For example, the object image may include a 3D image. The 3D image may be a 3D representation of the selected at least one object, wherein aspects or portions of the object that were not visible in the first screen when the object was displayed at the first location are generated by the processor 420 using the generative AI model.

According to an embodiment, the processor 420 may perform an operation of modifying at least one selected object based on the properties of the second location. For example, the processor 420 may extract properties of the second location (e.g., property values for the environment for the second location), and may modify (e.g., shape, shape, direction, angle, and/or brightness) at least one selected object based on the extracted properties. For example, the processor 420 may perform an operation of modifying at least one selected object based on the extracted properties of the second location, together with the in-painting and/or the out-painting operation described above. In some examples, the operations of extracting properties of the second location and modifying at least one selected object based on the extracted properties may be performed by the processor 420 without using the generative AI model, in addition to performing the in-painting and/or the out-painting operation using the generative AI model. Alternatively, the processor 420 may perform an operation of modifying at least one selected object based on the extracted properties of the second location (without using the generative AI model in some examples) without performing the in-painting and/or the out-painting operation.

According to an embodiment, based on identifying a third gesture of the user using the camera 410 (or based on identifying a change in the third gesture from the second gesture), the processor 420 may display, through the display 460, the object image located at the second location. For example, the processor 420 may display a second screen including the object image disposed at the second location through the display 460. In some examples, the second screen may be defined as a screen in which the object image is displayed at the second location, i.e. a screen in which the copying/cutting and pasting process is complete. For example, the third gesture may be different from the second gesture. The third gesture may be the same as or different from the first gesture. For example, the processor 420 may display the object image at the second location of the existing first screen. Alternatively, the processor 420 may display an object image at a second location of a screen different from the existing first screen.

According to an embodiment, based on the object image being displayed (or pasted) at the second location, the processor 420 may maintain the display of at least one object at the first location (e.g., copy and paste function). According to implementation, the processor 420 may not display at least one object at the first location based on the object image being displayed (or pasted) at the second location (e.g., a cut function). For example, the third gesture for the copy and paste function may be designated to differ from the third gesture for the cut function.

According to an embodiment, the generative artificial intelligence (AI) model may newly generate content similar to the corresponding content using existing content such as text, audio, and/or image. For example, the generative AI model may learn patterns of contents to generate new content as a result of inference. For example, the generative AI model may generate (or obtain or output) a new image by performing at least one of an in-painting operation or an out-painting operation on the image. It will be appreciated that the present disclosure is not limited to any particular generative AI model and that any suitable image-based generative AI model may be used to perform the in-painting and out-painting operations.

According to an embodiment, the in-painting operation may indicate an operation (or a function) of generating (or coloring) the portion (or an unidentified portion) deleted from the image to match its surroundings using the generative AI model. Alternatively, the in-painting operation may indicate an operation of generating (or coloring) the portion obscured by some objects in the image to match the surroundings using the generative AI model. For example, the in-painting operation may be used to generate portions of the object that were not visible in the first location so that those portions are visible when the object is displayed in the second location. In some examples, properties of the second location may be used to determine which portions of the object will be visible in the second location, such that only those portions are generated by the in-painting operation.

According to an embodiment, the out-painting operation may indicate or include an operation (or function) of expanding the outer area of the image while generating (or coloring) the expanded portion to match the existing image using the generative AI model. For example, the out-painting operation may be used to modify the object so that the object visually matches the properties of the second location. For example, the out-painting operation may include generating a shadow (or lighting) that would be cast by the object in the second location, generating shadows (or lighting) that would be cast onto the object based on objects in or around the second location, and/or changing a visual style or decoration of the object to match a visual style or decoration of the second location.

According to an embodiment, based on the object image being displayed (or pasted) at the second location, the processor 420 may maintain the display of at least one object at the first location (e.g., copy and paste function). According to implementation, the processor 420 may not display at least one object at the first location based on the object image being displayed (or pasted) at the second location (e.g., a cut function). For example, the third gesture for the copy and paste function may be designated to differ from the third gesture for the cut function.

According to an embodiment, the processor 420 may change the augmented reality environment of the first screen to the virtual reality environment, based on identifying a fourth gesture of the user using the camera 410 (or based on identifying a change from the second gesture to the fourth gesture). For example, if the first screen represents an AR environment, the user may use a fourth gesture to change to a screen representing a VR environment. According to an embodiment, when it is identified that another object (e.g., a real object or a virtual object) is present at the second location of the changed virtual reality environment, the processor 420 may display the object image not to overlap the other object. For example, the processor 420 may adjust the location of the other object or object image with respect to the second location (or the environment corresponding to the second location). For example, the fourth gesture may be a gesture by the hand different from the user's hand corresponding to the first gesture. For example, the fourth gesture may include a gesture of flipping the hand or a gesture of waving or swiping the hand.

According to another embodiment, the processor 420 may change the virtual reality environment of the first screen to the augmented reality environment based on identifying the fourth gesture of the user using the camera 410 (or based on identifying a change from the second gesture to the fourth gesture). For example, if the first screen represents a VR environment, the user may use a fourth gesture to change to a screen representing an AR environment. According to an embodiment, when it is identified that another object is present at the second location of the changed augmented reality environment, the processor 420 may display both the other object and the object image at the second location. For example, the processor 420 may display the object image to overlap the other object.

According to an embodiment, the processor 420 may identify the gaze (e.g. gaze direction) of the user wearing the wearable electronic device 401 through at least one sensor (not shown). For example, the at least one sensor may be implemented as a sensor capable of identifying the gaze by identifying an eye (e.g., a pupil or an iris) of the user wearing the wearable electronic device 401. Alternatively, according to an embodiment, the processor 420 may identify the gaze of the user wearing the wearable electronic device 401 using a gaze tracking camera (e.g., the first camera module 251 of FIG. 2 or the face recognition camera modules 325 and 326 of FIG. 3). According to an embodiment, the processor 420 may select at least one of a plurality of objects included in the first screen to be copied by further considering the gaze of the user. For example, based on identifying the gaze of the user the processor 420 may determine which objects included in the first screen the user is looking at, and may select the objects accordingly.

According to an embodiment, the processor 420 may perform an operation of selecting the object to be copied, an operation of selecting the location to paste the copied object, an operation of rendering an image corresponding to the copied object, and an operation of displaying the rendered image at the corresponding location. Specific operations for this are described below in detail.

At least some of the operations of the wearable electronic device 401 described below may be performed by the processor 420 or the generative AI model. However, for convenience of description, the following operations are described as being performed by the wearable electronic device 401.

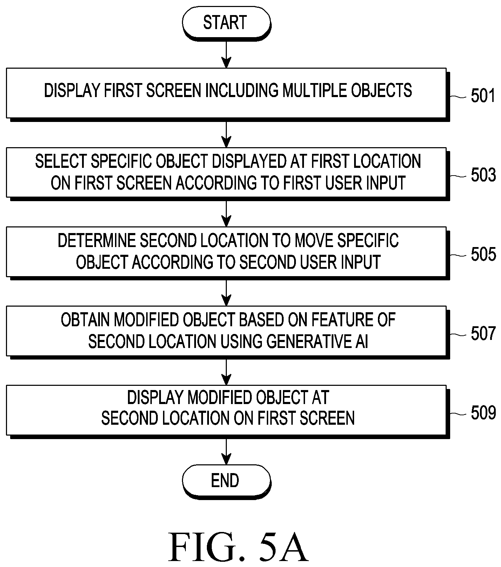

FIG. 5A is a flowchart illustrating an operation method of a wearable electronic device, according to an embodiment.

Referring to FIG. 5A, according to an embodiment, in operation 501, a wearable electronic device (e.g., the wearable electronic device 401 of FIG. 4) may display a first screen including a plurality of objects through a display (e.g., the display 460 of FIG. 4). For example, the wearable electronic device 401 may display the first screen including the plurality of objects, based on an image captured using a camera (e.g., the camera 410 of FIG. 4). For example, the first screen may be an augmented reality screen or an extended reality screen. For example, a plurality of objects may correspond to real objects and/or virtual objects based on an image obtained using the camera 410. Alternatively, the wearable electronic device 401 may display a virtual first screen (e.g., a virtual reality screen) without using the camera 410.

According to an embodiment, in operation 503, the wearable electronic device 401 may select a specific object displayed at a first location on the first screen according to a first user input. For example, the first user input may include a designated gesture of the user, an input to a button of the wearable electronic device 401 (or a controller of the wearable electronic device 401), or an input to a control menu (e.g., a control menu displayed on the display 460). For example, the wearable electronic device 401 may modify an image corresponding to the selected first object into a 3D object. Alternatively, the wearable electronic device 401 may recognize a plurality of objects (e.g., all the objects included in the screen) included in the first screen as 3D objects, and may identify a 3D object corresponding to the selected first object 615.

According to an embodiment, in operation 505, the wearable electronic device 401 may determine a second location to move the specific object according to a second user input. For example, the second location may indicate a location different from the first location on the first screen. Alternatively, the second location may indicate a location where a specific object is to be displayed on a screen different from the first screen (e.g., augmented reality screen-> virtual reality screen). For example, the second user input may be an input different from the first user input. For example, the second user input may include a designated gesture of the user, an input to a button of the wearable electronic device 401 (or a controller of the wearable electronic device 401), or an input to a control menu (e.g., a control menu displayed on the display 460).

According to an embodiment, in operation 507, the wearable electronic device 401 may obtain the modified object of the specific object based on the feature (or property) of the second location using the generative AI model. For example, the wearable electronic device 401 may modify the specific object to match the second location. For example, the wearable electronic device 401 may modify a specific two-dimensional (2D) object into a 3D object, based on the image obtained through the camera 410. The wearable electronic device 401 may modify at least one of the size, brightness, angle, direction, or shape of the 3D object to match the second location. Further, the wearable electronic device 401 may perform an in-painting operation (e.g., an operation of generating/coloring the portion obscured in the specific object) and/or an out-painting operation (e.g., an operation of adding a shadow portion of the specific object) on the specific object using the generative AI model. Further, the wearable electronic device 401 may perform an operation of modifying at least one selected object based on the properties of the second location. For example, the processor 420 may extract properties of the second location (e.g., property values for the environment for the second location), and may modify (e.g., shape, shape, direction, angle, and/or brightness) at least one selected object based on the extracted properties. In some examples, obtaining the modified object of the specific object based on the feature (or property) of the second location in operation 507 may be performed without using a generative AI model. For example, the processor 420 may extract properties of the second location (e.g., property values for the environment for the second location), and may modify (e.g., shape, shape, direction, angle, and/or brightness) at least one selected object based on the extracted properties without using a generative AI model.

According to an embodiment, in operation 509, the wearable electronic device 401 may display the modified object (e.g., a 3D object) at the second location on the screen. For example, the wearable electronic device 401 may display the modified object at the second location on the first screen. Alternatively, the wearable electronic device 401 may display the modified object at the second location on a screen (e.g., augmented reality screen-> virtual reality screen) different from the first screen. In this case, the wearable electronic device 401 may display the modified object at the second location in response to the third user input. For example, the third user input may be an input different from the second user input. For example, the third user input may include a designated gesture of the user, an input to a button of the wearable electronic device 401 (or a controller of the wearable electronic device 401), or an input to a control menu (e.g., a control menu displayed on the display 460).

According to an embodiment, the wearable electronic device 401 may modify the corresponding object considering the theme or dominant atmosphere of the second location (or the environment of the second location) where the selected object is to be pasted. For example, the wearable electronic device 401 may extract at least one keyword (e.g., a keyword indicating the theme or dominant atmosphere of the second location) at the second location (or the environment of the second location) where the selected object is to be pasted, and may regenerate (e.g., modify) the selected object using the extracted keyword to fit the environment where the selected object is to be attached. For example, the operation of regenerating (or modifying) the selected object may be performed in operation 507. Thereafter, the wearable electronic device 401 may paste and display the regenerated (or modified) object at the second location.

Through the above-described method, the wearable electronic device 401 may modify the shape and/or appearance of the object to be copied among the plurality of objects displayed on the screen to suit the features (or properties) of another location (or space), and may display the modified object (e.g., 3D object) at the corresponding location (or space). Further, the wearable electronic device 401 may provide a function of easily and effectively copying and pasting not only an object corresponding to a real object displayed on a screen, but also an object corresponding to a virtual object.

Meanwhile, above and hereinafter, for convenience of description, user input is described as a user gesture. However, according to an embodiment, the user input may be implemented as various inputs (e.g., a voice, an input to a button of the controller, and an input to the control menu) other than a gesture.

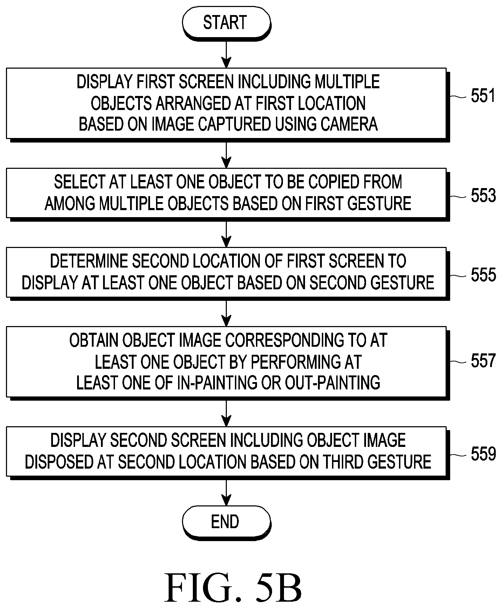

FIG. 5B is a flowchart illustrating an operation method of a wearable electronic device, according to an embodiment.

Referring to FIG. 5B, according to an embodiment, in operation 551, a wearable electronic device (e.g., the wearable electronic device 401 of FIG. 4) may display a first screen including a plurality of objects disposed at a first location, based on an image captured using a camera (e.g., the camera 410 of FIG. 4). For example, the first location may indicate the location where a plurality of objects are disposed on a first screen displayed through a display (e.g., the display 460 of FIG. 4).

According to an embodiment, in operation 553, the wearable electronic device 401 may select at least one object to be copied from among the plurality of objects included in the first screen, based on a first gesture of the user. For example, the wearable electronic device 401 may copy at least one selected object by the first gesture. Further, the wearable electronic device 401 may identify or obtain information about the copied at least one object (e.g., an image indicating the copied at least one object).

According to an embodiment, in operation 555, the wearable electronic device 401 may determine the second location on the first screen to display (or paste) at least one object, based on a second gesture of the user. For example, the second location may be different from the first location.

According to an embodiment, in operation 557, the wearable electronic device 401 may obtain the object image corresponding to the at least one object by performing at least one of in-painting or out-painting on the image indicating the copied at least one object using the generative AI model. For example, the object image may include an image in which a portion obscured by another object is generated in at least one object copied by performing in-painting. Further, the object image may include an image (e.g., a shadow image of at least one selected object) generated by considering information (e.g., lighting) about the second location in at least one object copied by performing out-painting. For example, the object image may be rendered as a 3D image.

According to an embodiment, in operation 559, the wearable electronic device 401 may display a second screen including the object image disposed at the second location, based on the third gesture of the user. For example, when the object to be copied is a virtual object, the wearable electronic device 401 may maintain the display of the at least one object at the existing first location on the second screen or may no longer display the at least one object at the first location, based on the object image being displayed at the second location. For example, the wearable electronic device 401 may maintain the display of the at least one object at the existing first location on the second screen or may no longer display the at least one object at the first location, based on the object image being displayed at the second location in the virtual reality space or the extended reality space. According to implementation, based on the object image being displayed at the second location in the augmented reality space, the wearable electronic device 401 may maintain the display of the at least one object at the existing first location on the second screen or may no longer display the at least one object at the first location. For example, in the augmented reality space, the wearable electronic device 401 may control the display not to display a portion of the corresponding object at the first location in the image obtained through the camera.

Through the above-described method, the wearable electronic device 401 may display the object pasted onto the screen to naturally match the entire environment using the generative AI model.

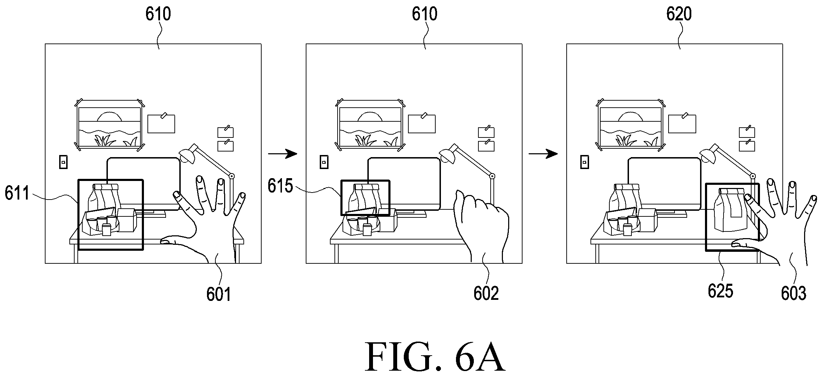

FIG. 6A is a view illustrating a function of copying and pasting an object displayed on a screen by a wearable electronic device according to an embodiment.

Referring to FIG. 6A, according to an embodiment, a wearable electronic device (e.g., the wearable electronic device 401 of FIG. 4) may display a first screen 610 including a plurality of objects through a display (e.g., the display 460 of FIG. 4). For example, the wearable electronic device 401 may display a first screen 610 based on an image captured through the camera 410. For example, the first screen 610 may include an augmented reality image.

According to an embodiment, the wearable electronic device 401 may identify a first gesture 601 of the user using the camera 410. For example, the first gesture 601 may include a gesture of opening all of the user's fingers.

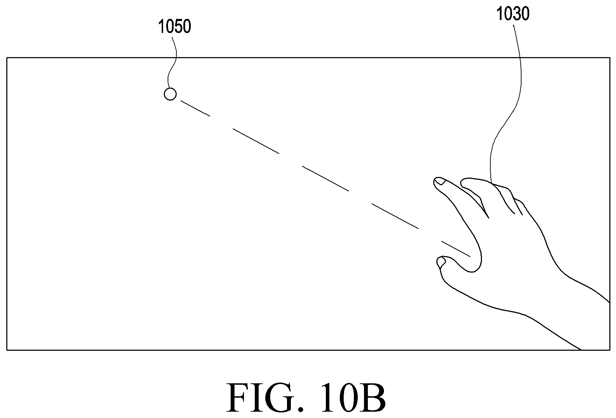

According to an embodiment, the wearable electronic device 401 may identify an area 611 (e.g., an area indicating a copy range) indicated by the first gesture. The wearable electronic device 401 may identify a plurality of objects included in the area 611. For example, the plurality of objects may be displayed at a first location. The wearable electronic device 401 may select a first object 615 among the plurality of objects as an object to be copied. For example, the wearable electronic device 401 may determine or select an object indicated by an indicator (e.g., the indicator 1050 of FIG. 10B) output from the user's hand as the first object 615. The wearable electronic device 401 may copy or save an image corresponding to the selected first object 615. For example, the first object 615 may be determined as an object touched by the user's hand indicating the first gesture or an object indicated by the user's palm. For example, the wearable electronic device 401 may modify an image corresponding to the selected first object into a 3D object. Alternatively, the wearable electronic device 401 may recognize a plurality of objects (e.g., all the objects included in the screen) included in the first screen as 3D objects, and may identify or obtain a 3D object corresponding to the selected first object 615.

According to an embodiment, the wearable electronic device 401 may identify a second gesture 602 of the user. For example, the second gesture may include a gesture of closing all of the user's fingers. The wearable electronic device 401 may determine a second location to display the first object 615 in response to the second gesture. For example, the second location may be determined as a location touched by the user's hand indicating the second gesture or a location indicated by the user's hand. According to an embodiment, the wearable electronic device 401 may modify the selected (or copied) at least one object based on properties of the second location (e.g., the second location on the screen where the corresponding object is displayed through the display 460). The wearable electronic device 401 may generate a 3D object obtained by changing the first object according to the property of the second location using the generative AI model. For example, the wearable electronic device 401 may generate an object image 625 corresponding to the first object 615 (e.g., an image corresponding to a 3D object obtained by changing the first object according to the property of the second location). For example, the second gesture may be a gesture changed after the user's hand moves to the second location. For example, the second gesture may mean that the user's hand is changed to the second gesture after the user's hand moves to the second location while maintaining the first gesture. Alternatively, the second gesture may mean that the user's hand is changed from the first location to the second gesture and then moved to the second location.

According to an embodiment, the wearable electronic device 401 may identify a third gesture 603 of the user. For example, the third gesture may include a gesture of opening all of the user's fingers. The wearable electronic device 401 may display, through the display 460, a second screen 620 including the object image 625 corresponding to the first object 615 disposed at the second location in response to the third gesture 603. In this case, the wearable electronic device 401 may display the first object 615 at the first location on the second screen. For example, the third gesture 603 may be a gesture designated for the function of pasting a specific object.

Through the method described with reference to FIG. 6A, the wearable electronic device 401 may copy the first object 615 and display the object image 625 corresponding to the copied first object 615 at the second location.

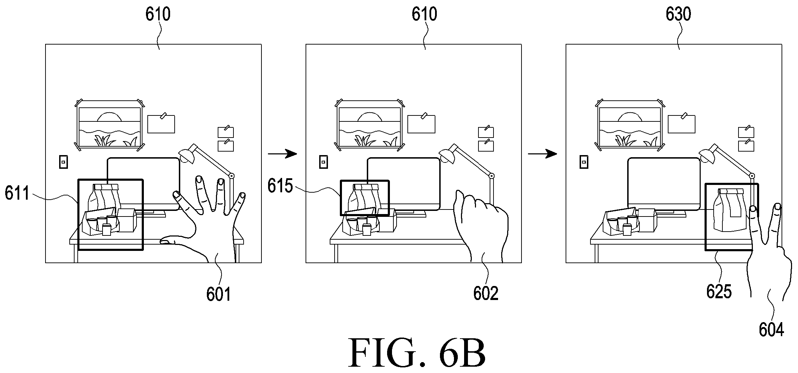

FIG. 6B is a view illustrating a function of cutting an object displayed on a screen by a wearable electronic device according to an embodiment.

Referring to FIG. 6B, as compared with FIG. 6A, the wearable electronic device 401 may set a different designated function according to the type of the third gesture.

According to an embodiment, according to an embodiment, the wearable electronic device 401 may identify a third gesture 604 of the user. For example, the third gesture may include a gesture of opening two fingers of the user. The wearable electronic device 401 may display, through the display 460, a second screen 630 including the object image 625 corresponding to the first object 615 disposed at the second location in response to the third gesture 603. In this case, the wearable electronic device 401 may not display the first object 615 at the first location on the second screen. For example, the third gesture 604 may be a gesture designated for the function of cutting a specific object.

According to the above-described method, the wearable electronic device 401 may easily copy the object displayed on the display 460 and paste or cut the copied object. Accordingly, usability of the wearable electronic device 401 may be increased.

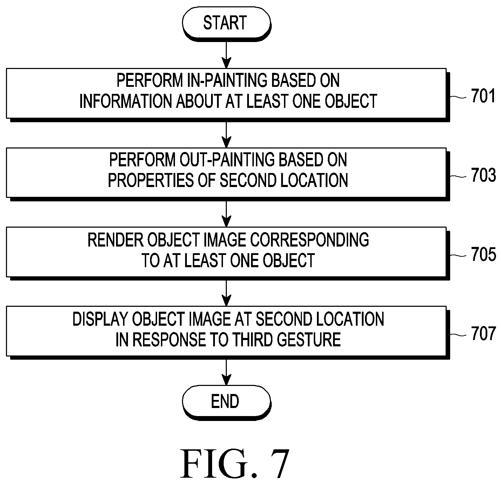

FIG. 7 is a flowchart illustrating in-painting and out-painting, performed by a wearable electronic device on an image representing at least one object using a generative AI model, according to an embodiment.

Referring to FIG. 7, according to an embodiment, in operation 701, a wearable electronic device (e.g., the wearable electronic device 401 of FIG. 4) may perform in-painting based on information about at least one selected (or copied) object. For example, the wearable electronic device may input an image representing at least one object to the generative AI model to perform in-painting on the image. For example, the wearable electronic device 401 may perform in-painting to generate an image corresponding to the portion obscured by another object in at least one object. Further, when the at least one object is cut, the wearable electronic device 401 may perform in-painting on the cut portion and generate an image corresponding to the portion.

According to an embodiment, the wearable electronic device 401 may modify the selected (or copied) at least one object based on properties of the second location (e.g., the second location on the screen where the corresponding object is displayed through the display 460), and may display the modified at least one object at the second location. According to an embodiment, in operation 703, the wearable electronic device 401 may perform out-painting based on properties of the second location (e.g., the second location the screen displayed through the display 460) where the selected (or copied) at least one object is to be displayed (or pasted). For example, the wearable electronic device may perform out-painting on the image representing the at least one object by inputting the properties of the second location to the generative AI model. For example, the wearable electronic device 401 may perform out-painting to generate an image related to the second location (e.g., an image corresponding to a shadow and/or lighting related to the second location) based on the image corresponding to the at least one object. For example, at least one of the size, direction, or brightness of the shadow of the at least one object at the second location may be different from at least one of the size, direction, or brightness of the shadow of the at least one object at the first location.

According to an embodiment, in operation 705, the wearable electronic device 401 may render the object image corresponding to at least one object by performing in-painting and/or out-painting. For example, the object image may be implemented as a 3D image.

According to an embodiment, in operation 707, the wearable electronic device 401 may display the object image at the second location through the display 460 in response to the third gesture.

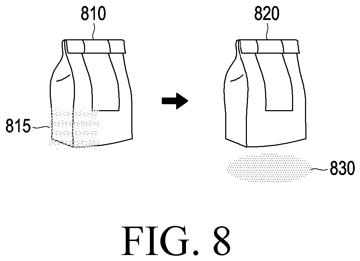

FIG. 8 illustrates in-painting and out-painting, performed by a wearable electronic device on an image representing at least one object using a generative AI model, according to an embodiment;
Referring to FIG. 8, according to an embodiment, a wearable electronic device (e.g., the wearable electronic device 401 of FIG. 4) may select or determine a first object (e.g., an object corresponding to a real object or a virtual object) displayed on a first screen as an object to be copied in response to a user input (e.g., a gesture or an input to a button). For example, when the first object is an object corresponding to a real object, the wearable electronic device 401 may identify a 2D image corresponding to the first object, based on an image obtained through a camera (e.g., the camera 410 of FIG. 4). The wearable electronic device 401 may change the 2D image corresponding to the first object to a 3D object or identify the same using the generative AI model. For example, the wearable electronic device may change the 2D image corresponding to the first object to a 3D object and identify the same, based on identifying a user input for manipulating the first object (e.g., a user input for requesting to copy the first object).

According to an embodiment, the first image 810 corresponding to the selected first object may include an unidentified portion 815 (or an inaccurately identified portion) obscured by another object.

According to an embodiment, the generative AI model may generate (e.g., color) an image corresponding to the unidentified portion 815 of the first image 810 by performing an in-painting operation on the first image 810. In other words, the generative AI model may generate an image (e.g., pixel values of the corresponding portion) of the deleted or unidentified (or obscured) portion 815 inside the first image 810. The generative AI model may generate and output a second image 820 including the image generated by the in-painting operation.

According to an embodiment, the generative AI model may perform an out-painting operation on the first image 810 to generate (e.g., color) an image corresponding to the portion to be expanded in the first image 810 based on properties of a second location where the first object is to be displayed. In other words, the generative AI model may generate an image (e.g., pixel values of the corresponding portion) of the portion to be extended outside the first image 810. The generative AI model may generate and output an object image including a third image 830 generated by the out-painting operation.

According to an embodiment, the generative AI model may generate and output an object image (e.g., an image including the second image 820 and the third image 830) by performing both an in-painting operation and an out-painting operation.

According to an embodiment, in response to the third gesture, the wearable electronic device 401 may display the object image generated (or rendered) using the generative AI model at the second location.

Through the above-described method, the wearable electronic device 401 may configure a screen to naturally match the entire environment by displaying the object image generated using the generative AI model on the screen.

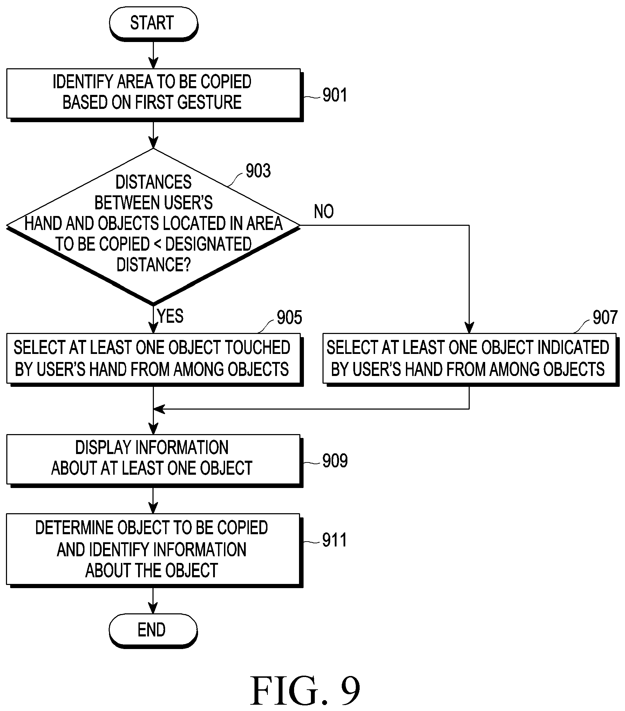

FIG. 9 is a flowchart illustrating a method for selecting at least one object by a wearable electronic device, according to an embodiment.

Referring to FIG. 9, according to an embodiment, in operation 901, a wearable electronic device (e.g., the wearable electronic device 401 of FIG. 4) may identify an area to be copied in a first screen displayed through the display (e.g., the display 460 of FIG. 4) based on a first gesture. For example, the first gesture may include a gesture of opening all of the user's fingers. In this case, the wearable electronic device 401 may determine the area indicated by the palm of the user as the area to be copied.

According to an embodiment, in operation 903, the wearable electronic device 401 may identify the distances between the user's hand and objects located in the area to be copied, by analyzing the image captured using the camera 410. For example, in operation 903, the wearable electronic device 401 may identify whether the distances between the user's hand and objects located in the area to be copied are shorter than a designated distance. For example, the designated distance may be designated as a distance indicating that the user's hand contacts or substantially contacts the real object.

According to an embodiment, when it is identified that the distances between the hand of the user and the objects located in the area to be copied are shorter than the designated distance (Yes in operation 903), in operation 905, the wearable electronic device 401 may select or determine at least one object contacted by the hand of the user among the objects as the object to be copied. For example, when the corresponding object is a real object, the wearable electronic device 401 may identify whether the user's hand contacts the real object using the camera 410. Alternatively, when the corresponding object is a virtual object, the wearable electronic device 401 may identify whether an image representing the user's hand contacts the virtual object or is located within a designated distance.

According to an embodiment, when it is identified that the distances between the hand of the user and the objects located in the area to be copied are not shorter than the designated distance (No in operation 903), in operation 907, the wearable electronic device 401 may select or determine at least one object indicated by the hand of the user among the objects as the object to be copied. For example, the object to be copied may be selected or determined using a pointer displayed with respect to the user's hand or palm.

According to an embodiment, in operation 909, the wearable electronic device 401 may display information (e.g., a preview image) about the selected at least one object through the display 460. For example, the wearable electronic device 401 may display at least one preview image corresponding to at least one object on the first screen. Alternatively, the wearable electronic device 401 may display, on the first screen, an indicator (e.g., an indicator using a color, a solid line, a dotted line, and/or a shade) for distinguishing the selected at least one object from other objects. For example, the indicator may be displayed on at least one selected object.

According to another embodiment, the wearable electronic device 401 may display at least one preview image corresponding to at least one object included in the area to be copied on the first screen. Thereafter, the wearable electronic device 401 may identify a user input to at least one preview image to select or determine the object to be copied.

According to an embodiment, in operation 911, the wearable electronic device 401 may determine the object to be copied, and may identify, store, or copy information about the object (e.g., an image indicating the object to be copied). According to implementation, the wearable electronic device 401 may finally select the object to be copied based on a user input (e.g., an additional user input or the user's gaze) to at least one preview image. For example, the image representing the object to be copied may include a portion obscured by another object. According to an embodiment, the at least one preview image related to the object to be copied may be an image in which a portion obscured by another object is generated through an in-painting operation.

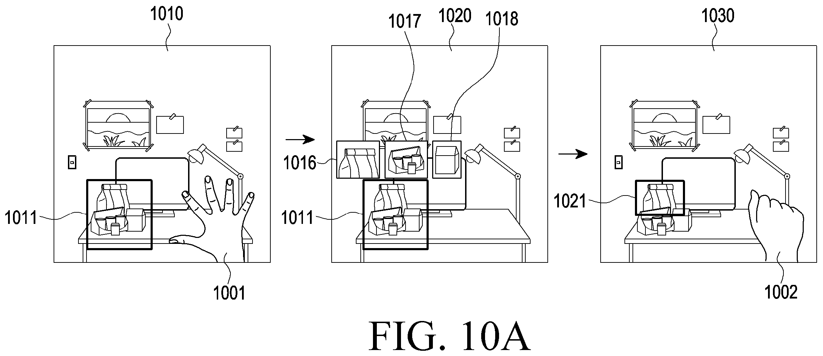

FIGS. 10A and 10B are views illustrating a method for selecting at least one object by a wearable electronic device, according to an embodiment.

Referring to FIG. 10A, according to an embodiment, a wearable electronic device (e.g., the wearable electronic device 401 of FIG. 4) may display a first screen 1010 including a plurality of objects through a display (e.g., the display 460 of FIG. 4). For example, the wearable electronic device 401 may display a first screen 1010 based on an image captured through the camera 410. For example, the first screen 1010 may include an augmented reality image.

According to an embodiment, the wearable electronic device 401 may identify the area 1011 to be copied in the first screen in response to the user's first gesture 1001 (e.g., a gesture of opening all of the user's fingers) identified using the camera 410. The wearable electronic device 401 may identify objects included in the area 1011 to be copied.

According to an embodiment, the wearable electronic device 401 may display preview images 1016, 1017, and 1018 corresponding to objects included in the area 1011 to be copied. The wearable electronic device 401 may identify a user input (e.g., an input using at least one of the user's gesture or gaze) for selecting a first preview image 1016 from among the preview images 1016, 1017, and 1018. The wearable electronic device 401 may determine a first object corresponding to the first preview image as an object to be copied, based on a user input. Depending on the implementation, the wearable electronic device 401 may select a plurality of preview images based on a user input. For example, when a plurality of preview images are selected, the wearable electronic device 401 may determine the plurality of objects as a plurality of target objects.

According to another embodiment, the preview image may display a plurality of objects forming a group. When a corresponding preview image is selected according to a user input, the wearable electronic device 401 may determine a plurality of objects as objects to be copied.

According to another embodiment, the wearable electronic device 401 may identify a first gesture 1001 while the user's gaze is directed toward the first preview image 1016. In response to identifying the first gesture 1001, the wearable electronic device 401 may determine the first object corresponding to the first preview image 1016, to which the user's gaze is directed, as an object to be copied.

According to an embodiment, the wearable electronic device 401 may display a notification for identifying the selected first object on the first screen 1030. For example, an object 1021 capable of distinguishing the first object from other objects may be displayed on the first object displayed on the first screen 1030.

According to an embodiment, the wearable electronic device 401 may determine a location to display the copied first object in response to identifying a second gesture 1002 (e.g., a gesture of closing all of the user's fingers or making a fist). For example, while maintaining the second gesture 1002, the wearable electronic device 401 may determine a location to display the copied first object as the area where the user's hand is moved or the area where the user's hand is located. Thereafter, the wearable electronic device 401 may display the copied first object at a corresponding location in response to identifying a third gesture (e.g., a gesture of opening all of the user's fingers).

Referring to FIG. 10B, according to an embodiment, the wearable electronic device 401 may display a pointer 1050 displayed with respect to the user's hand (or palm) 1030 on the first screen 1010 and/or 1020. The wearable electronic device 401 may select or determine an object to be copied using the pointer 1050.

Through the above-described method, the wearable electronic device 401 may easily and effectively select or determine an object to be copied from the first screen.

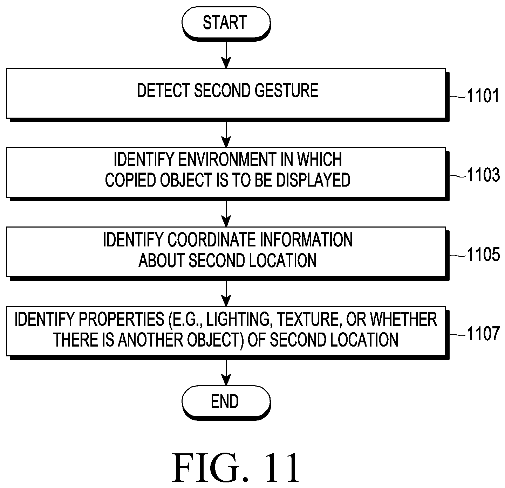

FIG. 11 is a flowchart illustrating a method for determining a location to display at least one selected object by a wearable electronic device, according to an embodiment.

Referring to FIG. 11, according to an embodiment, in operation 1101, after selecting at least one object to be copied, the wearable electronic device 401 may detect or identify a second gesture of the user using a camera (e.g., the camera 410 of FIG. 4).

According to an embodiment, in operation 1103, the wearable electronic device 401 may identify an environment in which at least one object is to be pasted or displayed. For example, the wearable electronic device 401 may identify whether an environment in which at least one object is to be pasted or displayed is an augmented reality environment or a virtual reality environment.

According to an embodiment, in operation 1105, the wearable electronic device 401 may identify a second location where at least one object is to be pasted or displayed, and may identify coordinate information about the second location.

According to an embodiment, in operation 1107, the wearable electronic device 401 may identify the properties (e.g., lighting, texture, and/or whether there is another object) of the second location. For example, the wearable electronic device 401 may identify properties of the second location considering the environment (e.g., an augmented reality environment or a virtual reality environment) in which at least one object is to be pasted or displayed. For example, in the augmented reality environment, the wearable electronic device 401 may obtain information about actual lighting identified using the camera 410 as information about a property of the second location. Alternatively, in the virtual reality environment, the wearable electronic device 401 may obtain information about the rendered virtual lighting as information about a property of the second location. For example, when the environment in which the at least one object is to be pasted or displayed is a virtual reality environment (or a virtual space), the wearable electronic device 401 may identify an overall theme (e.g., an oil painting style, a watercolor painting style, a cyber style, or a Gogh style) of the corresponding virtual reality environment, and may modify at least one object based on the identified theme of the virtual reality environment using the generative AI model. For example, the wearable electronic device 401 may modify at least one of the shape, the color, the direction, the slope, or the size of the at least one object so that the at least one object is suitable for or matches the corresponding theme.

According to an embodiment, the wearable electronic device 401 may perform an out-painting operation on the selected at least one image by inputting the properties of the second location to the generative AI model. For example, based on the lighting information about the second location, a shadow or lighting effect may be further added to the object image.

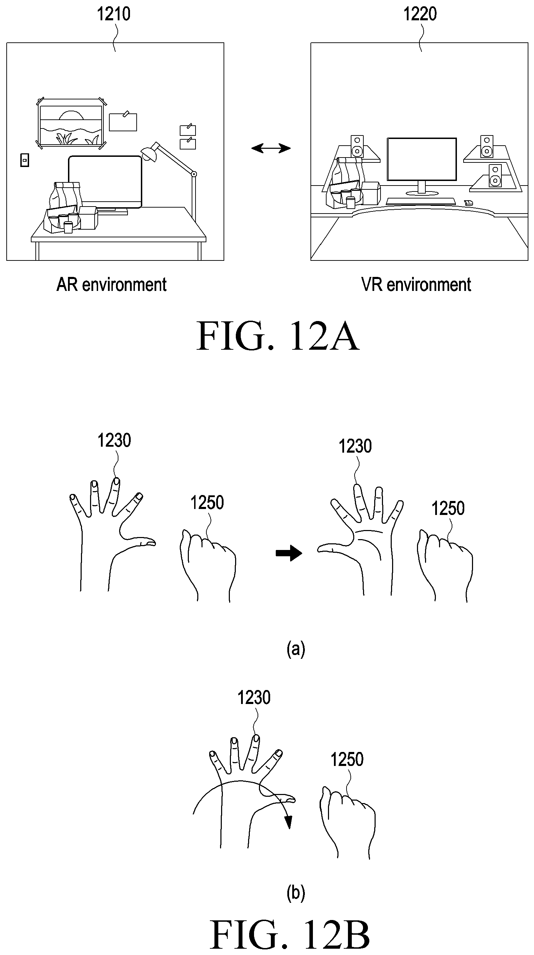

FIGS. 12A and 12B illustrate a method for determining a location to display at least one selected object by a wearable electronic device, according to an embodiment.

Referring to FIG. 12A, according to an embodiment, a wearable electronic device (e.g., the wearable electronic device 401 of FIG. 4) may display a first screen 1210 including an augmented reality image through a display (e.g., the display 460 of FIG. 4). For example, the wearable electronic device 401 may display the first screen 1210 including the augmented reality image using an image obtained through a camera (e.g., the camera of FIG. 4).

According to an embodiment, in response to identifying a fourth gesture, the wearable electronic device 401 may change the first screen 1210 including the augmented reality image to a second screen 1220 including a virtual reality image. Further, in response to identifying the fourth gesture, the wearable electronic device 401 may change the second screen 1220 including the virtual reality image to the first screen 1210 including the augmented reality image.

According to an embodiment, after selecting at least one object to be copied from among the objects included in the first screen 1210, when the fourth gesture is identified, the wearable electronic device 401 may change the first screen 1210 to the second screen 1220. **In** this case, the wearable electronic device 401 may identify a second location to display (or paste) at least one object copied on the second screen 1220. In identifying the properties of the second location, the wearable electronic device 401 may consider a virtual reality image corresponding to the virtual reality environment.

Referring to FIG. 12B, according to an embodiment, the wearable electronic device 401 may identify the fourth gesture together with the second gesture. The wearable electronic device 401 may determine the second location to display the copied at least one object based on the second gesture, and may change the environment to display the corresponding object based on the fourth gesture. In other words, the copied at least one object may be displayed (or pasted) on a screen (e.g., the second screen 1220) corresponding to another environment. For example, the second gesture may include a gesture of making a fist of one hand (e.g., the right hand) 1250 of the user. For example, the fourth gesture may be a gesture by the hand (e.g., the left hand) 1230 different from that of the second gesture. For example, the fourth gesture may be different from the second gesture.

Referring to FIG. 12B(a), according to an embodiment, the fourth gesture may include a gesture of flipping the left hand 1230 of the user while the left hand 1230 of the user is open. Referring to FIG. 12B(b), according to another embodiment, the fourth gesture may include a gesture of waving or swiping the left hand 1230 of the user while the left hand 1230 of the user is open.

According to an embodiment, the wearable electronic device 401 may easily change the environment in which the copied object is to be displayed. Further, the wearable electronic device 401 may generate an object image considering the environment in which the copied object is to be displayed, and may display the generated object image to match the corresponding environment.

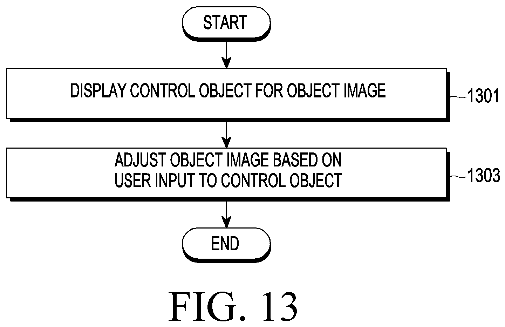

FIG. 13 is a flowchart illustrating a method for editing an object image by a wearable electronic device, according to an embodiment.

Referring to FIG. 13, according to an embodiment, in operation 1301, a wearable electronic device (e.g., the wearable electronic device 401 of FIG. 4) may display a second screen including an object image disposed at a second location through a display (e.g., the display 460 of FIG. 4) and then may display a control object for the object image on the second screen. For example, the control object may include at least one object for adjusting (or editing) at least one of the location, direction, size, or ratio of the object image. For example, the control object may be displayed around the object image.

According to an embodiment, in operation 1303, the wearable electronic device 401 may adjust or edit at least one of the location, direction, size, or ratio of the object image based on a user input to the control object. For example, when a user input for adjusting at least one of the location, direction, size, or ratio of the object image of the object image is identified, the wearable electronic device 401 may render the adjusted object image and display the rendered object image on the second screen.

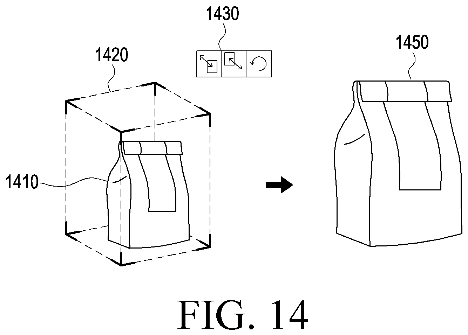

FIG. 14 illustrates a method for editing an object image by a wearable electronic device, according to an embodiment.

Referring to FIG. 14, a wearable electronic device (e.g., the wearable electronic device 401 of FIG. 4) may display an object image 1410 corresponding to a copied first object through a display (e.g., the display 460 of FIG. 4). For example, the object image 1410 may be implemented as a 3D image.

According to an embodiment, the wearable electronic device 401 may display a 3D object 1420 corresponding to the object image 1410. The wearable electronic device 401 may change the location of the object image 1410 based on a user input to the 3D object 1420.

According to an embodiment, the control object 1430 may be displayed around the object image 1410. For example, the control object 1430 may include objects for redirecting, enlarging (or increasing the ratio), and shrinking the object image. For example, the wearable electronic device 401 may change the direction and size (or ratio) of the object image 1410 based on a user input to the control object 1430. For example, when a user input to an object for increasing the size among the control objects 1430 is identified, the wearable electronic device 401 may display an enlarged object image 1450 of the object image 1410.

Through the above-described method, after displaying the object image 1401 at the second location, the wearable electronic device 401 may provide a user interface capable of easily adjusting the size, ratio, direction, or location of the corresponding object image.

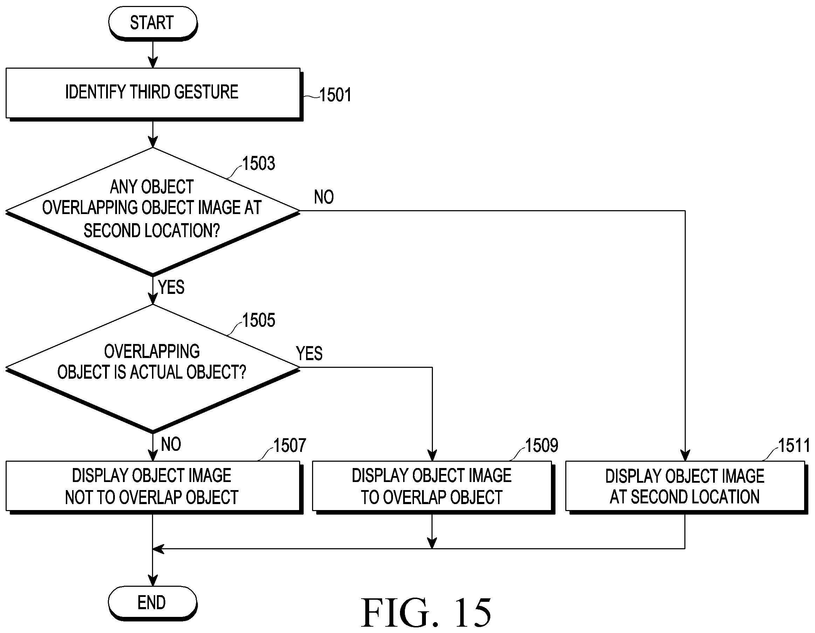

FIG. 15 is a flowchart illustrating a method for displaying an object image by a wearable electronic device, according to an embodiment.

Referring to FIG. 15, according to an embodiment, in operation 1501, a wearable electronic device (e.g., the wearable electronic device 401 of FIG. 4) may identify a third gesture. For example, the third gesture may be a gesture for displaying a copied object at a location (e.g., the second location) intended by the user.

According to an embodiment, in operation 1503, the wearable electronic device 401 may identify whether there is another object overlapping the object image at the second location.

According to an embodiment, when it is identified that there is no other object overlapping the object image at the second location (No in operation 1503), in operation 1511, the wearable electronic device 401 may display the object image at the second location.

According to an embodiment, when it is identified that there is another object overlapping the object image at the second location (Yes in operation 1503), in operation 1505, the wearable electronic device 401 may identify whether the object overlapping the object image is an actual object. For example, the actual object may refer to an actual object identified through the camera 410. For example, an object that is not an actual object may include a virtual object, for example a virtual object generated by the wearable electronic device 401.

According to an embodiment, when it is identified that the object overlapping the object image is not an actual object (No in operation 1505), in operation 1507, the wearable electronic device 401 may display the object image not to overlap the corresponding object. For example, when a virtual object is present at the second location, the wearable electronic device 401 may dispose and display the object image so that the virtual object and the object image do not overlap each other. Depending on the implementation, the wearable electronic device 401 may dispose and display virtual objects to overlap each other based on a user input or a preset condition. When the virtual objects are disposed to overlap each other, and one virtual object is displayed in front of another virtual object, the wearable electronic device 401 may not display a portion of the other virtual object (a portion obscured by the one virtual object). The wearable electronic device 401 may display a specific virtual object in front of or behind another virtual object according to a preset condition.

According to an embodiment, when it is identified that the object overlapping the object image is an actual object (Yes in operation 1505), in operation 1509, the wearable electronic device 401 may display the object image to at least partially overlap the object. For example, when a real object is present at the second location, the wearable electronic device 401 may dispose and display the object image so that the image representing the real object and the object image overlap each other. For example, the wearable electronic device 401 may display at least a portion of the object image in front of or behind the image representing the actual object.

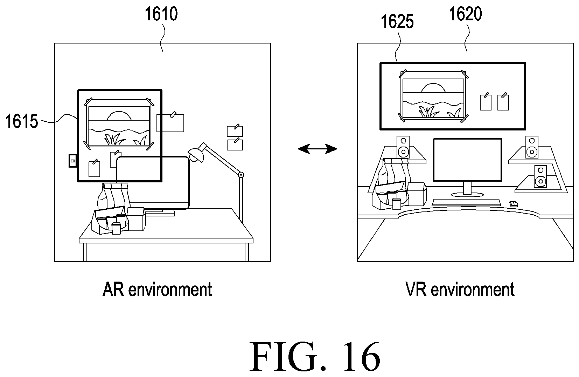

FIG. 16 is a view illustrating a method for displaying an object image by a wearable electronic device, according to an embodiment.

Referring to FIG. 16, according to an embodiment, a wearable electronic device (e.g., the wearable electronic device 401 of FIG. 4) may select and copy objects 1615 displayed at a first location included in a first screen 1610 corresponding to an augmented reality (AR) environment, based on the user's first gesture. According to an embodiment, the wearable electronic device 401 may display or paste the copied objects 1615 at the second location of the virtual reality (VR) environment. The wearable electronic device 401 may display the object image 1625 corresponding to the objects 1615 so that the virtual object disposed at the second location and the object image 1625 corresponding to the copied objects 1615 do not overlap each other. The wearable electronic device 401 may display a second screen 1625 in which the object image 1625 is disposed not to overlap another virtual object, in a virtual reality environment.

According to another embodiment, the wearable electronic device 401 may select and copy the virtual objects 1625 displayed at the second location on the second screen 1620 corresponding to the virtual reality environment. According to an embodiment, the wearable electronic device 401 may display or paste the copied virtual objects 1625 at the first location of the augmented reality (AR) environment. The wearable electronic device 401 may display the object image 1615 corresponding to the virtual objects 1625 so that the real object (e.g., a monitor) disposed at the first location and the object image 1615 corresponding to the copied virtual objects 1625 overlap each other. The wearable electronic device 401 may display a first screen 1615 in which the object image 1615 is disposed not to overlap another real object in the augmented reality environment.

According to the above-described method, the wearable electronic device may adjust the arrangement of the corresponding objects considering the environment in which the copied objects are to be pasted.

A wearable electronic device 401 wearable on a head of a user, according to an embodiment, may comprise a camera 410, a display 460, at least one processor 420, and memory 430 storing instructions. The instructions according to an embodiment may, when executed by the at least one processor, enable the wearable electronic device to, based on images captured using the camera, display, through the display, a first screen including a plurality of objects arranged at a first location. The instructions according to an embodiment may, when executed by the at least one processor, enable the wearable electronic device to, based on a first gesture of the user, select at least one object to copy among the plurality of objects. The instructions according to an embodiment may, when executed by the at least one processor, enable the wearable electronic device to, based on a second gesture of the user, determine a second location on the first screen to display the at least one object. The instructions according to an embodiment may, when executed by the at least one processor, enable the wearable electronic device to, perform at least one of in-painting a portion of the at least one object that is obscured by at least one other object or out-painting the at least one object based on properties of the second location by providing the properties of the second location and information about the at least one object to a generative AI model stored in the memory, and obtain an object image corresponding to the at least one object by performing at least one of the in-painting or the out-painting. The instructions according to an embodiment may, when executed by the at least one processor, enable the wearable electronic device to, based on a third gesture of the user, display, through the display, a second screen including the object image located at the second location.

The instructions, according to an embodiment, may, when executed by the at least one processor, enable the wearable electronic device to, based on copying an image corresponding to the at least one object, display the object image at the second location.

The instructions, according to an embodiment, may, when executed by the at least one processor, enable the wearable electronic device to, based on the third gesture, maintain or remove the at least one object displayed at the first location on the second screen.

The instructions, according to an embodiment, may, when executed by the at least one processor, enable the wearable electronic device to perform the in-painting on the portion of the at least one object that is obscured by the at least one other object to obtain the object image including an image corresponding to the obscured portion.

The instructions, according to an embodiment, may, when executed by the at least one processor, enable the wearable electronic device to, based on at least one of lighting information or texture information at the second location, perform out-painting on the at least one object to obtain the object image including an image corresponding to at least one of a shadow or lighting associated with the at least one object.

The instructions, according to an embodiment, may, when executed by the at least one processor, enable the wearable electronic device to, based on a fourth gesture of the user, change an augmented reality environment of the first screen to a virtual reality environment. The instructions, according to an embodiment, may, when executed by the at least one processor, enable the wearable electronic device to display the object image not to overlap another object when it is identified that the other object is present at the second location of the virtual reality environment.

The instructions, according to an embodiment, may, when executed by the at least one processor, enable the wearable electronic device, to, based on a fourth gesture of the user, change a virtual reality environment of the first screen to an augmented reality environment. The instructions, according to an embodiment, may, when executed by the at least one processor, enable the wearable electronic device to display the object image to overlap another object when it is identified that the other object is present at the second location of the augmented reality environment.

The instructions, according to an embodiment, may, when executed by the at least one processor, enable the wearable electronic device to, after displaying the object image at the second location, display a control object for adjusting at least one of a location, a direction, a size, or a ratio of the object image on the second screen. The instructions, according to an embodiment, may, when executed by the at least one processor, enable the wearable electronic device to adjust the object image based on a user input to the control object.

The instructions, according to an embodiment, may, when executed by the at least one processor, enable the wearable electronic device to select the at least one object touched by the first gesture or indicated by the first gesture among the plurality of objects.

The instructions, according to an embodiment, may, when executed by the at least one processor, enable the wearable electronic device to, based on the first gesture, display, on the first screen, at least one preview image representing the at least one object among the plurality of objects.

A method for operating a wearable electronic device 401 wearable on a head of a user, according to an embodiment, may comprise, based on images captured using a camera 410 included in the wearable electronic device, displaying, through a display 460 included in the wearable electronic device, a first screen including a plurality of objects arranged at a first location. The method for operating the wearable electronic device, according to an embodiment, may comprise, based on a first gesture of the user, selecting at least one object to copy among the plurality of objects. The method for operating the wearable electronic device, according to an embodiment, may comprise, based on a second gesture of the user, determining a second location on the first screen to display the at least one object. The method for operating the wearable electronic device, according to an embodiment, may comprise performing at least one of in-painting a portion of the at least one object that is obscured by at least one other object or out-painting the at least one object based on properties of the second location by providing the properties of the second location and information about the at least one object to a generative AI model stored in memory 430 included in the wearable electronic device, and obtaining an object image corresponding to the at least one object by performing at least one of the in-painting or the out-painting. The method for operating the wearable electronic device, according to an embodiment, may comprise, based on a third gesture of the user, displaying, through the display, a second screen including the object image located at the second location.

According to an embodiment, displaying the second screen may include based on copying an image corresponding to the at least one object, displaying the object image at the second location.

According to an embodiment, displaying the second screen may include, based on the third gesture, maintaining or removing the at least one object displayed at the first location on the second screen.

According to an embodiment, obtaining the object image may include performing the in-painting on the portion of the at least one object that is obscured by the at least one other object to obtain the object image including an image corresponding to the obscured portion.

According to an embodiment, obtaining the object image may include based on at least one of lighting information or texture information at the second location, performing out-painting on the at least one object to obtain the object image including an image corresponding to at least one of a shadow or lighting associated with the at least one object.

According to an embodiment, the method for operating the wearable electronic device may further comprise, based on a fourth gesture of the user, changing an augmented reality environment of the first screen to a virtual reality environment. According to an embodiment, the method for operating the wearable electronic device may further comprise displaying the object image not to overlap another object when it is identified that the other object is present at the second location of the virtual reality environment.

According to an embodiment, the method for operating the wearable electronic device may further comprise, based on a fourth gesture of the user, changing a virtual reality environment of the first screen to an augmented reality environment. According to an embodiment, the method for operating the wearable electronic device may further comprise displaying the object image to overlap another object when it is identified that the other object is present at the second location of the augmented reality environment.

According to an embodiment, the method for operating the wearable electronic device may further comprise, after displaying the object image at the second location, displaying a control object for adjusting at least one of a location, a direction, a size, or a ratio of the object image on the second screen. According to an embodiment, the method for operating the wearable electronic device may further comprise adjusting the object image based on a user input to the control object.

According to an embodiment, the method for operating the wearable electronic device may further comprise, based on the first gesture, displaying, on the first screen, at least one preview image representing the at least one object among the plurality of objects.

According to an embodiment, a non-transitory recording medium 130 or 430 may store instructions to execute, based on images captured using a camera 410 included in a wearable electronic device 401 wearable on a head of a user, displaying, through a display 460 included in the wearable electronic device, a first screen including a plurality of objects arranged at a first location, based on a first gesture of the user, selecting at least one object to copy among the plurality of objects, based on a second gesture of the user, determining a second location on the first screen to display the at least one object, performing at least one of in-painting a portion of the at least one object that is obscured by at least one other object or out-painting the at least one object based on properties of the second location by providing the properties of the second location and information about the at least one object to a generative AI model stored in memory 430 included in the wearable electronic device, and obtaining an object image corresponding to the at least one object by performing at least one of the in-painting or the out-painting, and based on a third gesture of the user, displaying, through the display, a second screen including the object image located at the second location.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (401) wearable on a head of a user, the wearable electronic device comprising:
a camera (410);
a display (460);
at least one processor (420); and
memory (430) storing instructions that, when executed by the at least one processor, enable the wearable electronic device to:
based on images captured using the camera, display, through the display, a first screen including a plurality of objects arranged at a first location;
based on a first gesture of the user, select at least one object to copy among the plurality of objects;
based on a second gesture of the user, determine a second location on the first screen to display the at least one object;
perform at least one of in-painting a portion of the at least one object that is obscured by at least one other object or out-painting the at least one object based on properties of the second location by providing the properties of the second location and information about the at least one object to a generative AI model stored in the memory, and obtain an object image corresponding to the at least one object by performing at least one of the in-painting or the out-painting; and
based on a third gesture of the user, display, through the display, a second screen including the object image located at the second location.

2. The wearable electronic device of claim 1, wherein the instructions, when executed by the at least one processor, enable the wearable electronic device to:
based on copying an image corresponding to the at least one object, display the object image at the second location.

3. The wearable electronic device of claim 1 or 2, wherein the instructions, when executed by the at least one processor, enable the wearable electronic device to:
based on the third gesture, maintain or remove the at least one object displayed at the first location on the second screen.

4. The wearable electronic device of any one of claims 1 to 3, wherein the instructions, when executed by the at least one processor, enable the wearable electronic device to:
perform the in-painting on the portion of the at least one object that is obscured by the at least one other object to obtain the object image including an image corresponding to the obscured portion.

5. The wearable electronic device of any one of claims 1 to 4, wherein the instructions, when executed by the at least one processor, enable the wearable electronic device to:
based on at least one of lighting information or texture information at the second location, perform out-painting on the at least one object to obtain the object image including an image corresponding to at least one of a shadow or lighting associated with the at least one object.

6. The wearable electronic device of any one of claims 1 to 5, wherein the instructions, when executed by the at least one processor, enable the wearable electronic device to:
based on a fourth gesture of the user, change an augmented reality environment of the first screen to a virtual reality environment; and
display the object image not to overlap another object when it is identified that the other object is present at the second location of the virtual reality environment.

7. The wearable electronic device of any one of claims 1 to 6, wherein the instructions, when executed by the at least one processor, enable the wearable electronic device to:
based on a fourth gesture of the user, change a virtual reality environment of the first screen to an augmented reality environment; and
display the object image to overlap another object when it is identified that the other object is present at the second location of the augmented reality environment.

8. The wearable electronic device of any one of claims 1 to 7, wherein the instructions, when executed by the at least one processor, enable the wearable electronic device to:
after displaying the object image at the second location, display a control object for adjusting at least one of a location, a direction, a size, or a ratio of the object image on the second screen; and
adjust the object image based on a user input to the control object.

9. The wearable electronic device of any one of claims 1 to 8, wherein the instructions, when executed by the at least one processor, enable the wearable electronic device to:
select the at least one object touched by the first gesture or indicated by the first gesture among the plurality of objects.

10. The wearable electronic device of any one of claims 1 to 9, wherein the instructions, when executed by the at least one processor, enable the wearable electronic device to:
based on the first gesture, display, on the first screen, at least one preview image representing the at least one object among the plurality of objects.

11. A method for operating a wearable electronic device (401) wearable on a head of a user, the method comprising:
based on images captured using a camera (410) included in the wearable electronic device, displaying, through a display (460) included in the wearable electronic device, a first screen including a plurality of objects arranged at a first location;
based on a first gesture of the user, selecting at least one object to copy among the plurality of objects;
based on a second gesture of the user, determining a second location on the first screen to display the at least one object;
performing at least one of in-painting a portion of the at least one object that is obscured by at least one other object or out-painting the at least one object based on properties of the second location by providing the properties of the second location and information about the at least one object to a generative AI model stored in memory (430) included in the wearable electronic device, and obtaining an object image corresponding to the at least one object by performing at least one of the in-painting or the out-painting; and
based on a third gesture of the user, displaying, through the display, a second screen including the object image located at the second location.

12. The method of claim 11, wherein displaying the second screen includes
based on copying an image corresponding to the at least one object, displaying the object image at the second location.

13. The method of claim 11 or 12, wherein displaying the second screen includes
based on the third gesture, maintaining or removing the at least one object displayed at the first location on the second screen.

14. The method of any one of claims 11 to 13, wherein obtaining the object image includes
performing the in-painting on the portion of the at least one object that is obscured by the at least one other object to obtain the object image including an image corresponding to the obscured portion.

15. A non-transitory recording medium (430) storing instructions that, when executed by at least one processor, cause the at least one processor to:
based on images captured using a camera (410) included in a wearable electronic device (401) wearable on a head of a user, displaying, through a display (460) included in the wearable electronic device, a first screen including a plurality of objects arranged at a first location;
based on a first gesture of the user, selecting at least one object to copy among the plurality of objects;
based on a second gesture of the user, determining a second location on the first screen to display the at least one object;
performing at least one of in-painting a portion of the at least one object that is obscured by at least one other object or out-painting the at least one object based on properties of the second location by providing the properties of the second location and information about the at least one object to a generative AI model stored in memory (430) included in the wearable electronic device, and obtaining an object image corresponding to the at least one object by performing at least one of the in-painting or the out-painting; and
based on a third gesture of the user, displaying, through the display, a second screen including the object image located at the second location.
